# EUROPEAN PATENT APPLICATION

(11) **EP 2 562 100 A2**
(43) Date of publication of application: **27.02.2013**
(21) Application number: 12001490.7
(22) Date of filing: 05.03.2012
(51) Int. Cl.: B65D 79/02

(54) **Container, in particular transport container for food**

(30) Priority: 26.08.2011 DE 202011105052 U
(71) Applicant: Enso Flexpro GmbH, 01097 Dresden (DE)
(72) Inventor: Pretterebner, Julius, 71570 Oppenweiler (DE)
(74) Representative: Grünecker, Kinkeldey, Stockmair & Schwanhäusser

(57) **Abstract**

The present invention relates to a container (1) for containing goods, in particular transport container for food, comprising an electronic seal (2), said electronic seal (2) comprising at least one sensor (3) for detecting at least one influencing factor affecting the state of transported goods; a transponder (4) for contactless transmission of data, said transponder (4) being coupled to said at least one sensor (3), so that said at least one variable detected by said sensor (3) is retrievable via said transponder (4); a display (5) for displaying at least one variable detected by said sensor (3), said display (5) at least once changing its appearance depending on said at least one influencing factor.

## Description

The present invention relates to a container, in particular to a transport container for food.

In the field of goods transportation within logistics systems, there is a need for adequate safeguarding of the containers and hence the goods contained therein against damage, theft or other undesirable influences. This need is particularly pronounced in containers used for transporting sensitive goods, such as for perishables foods in a cold chain.

In order to compensate the negative influence of the change of ambient parameters (such as a high temperature rise or drop, or strong shocks) on the state of the transported goods, such containers are provided with appropriate safeguards, such as temperature equipment, thermal insulation or dampers.

However, such mechanical protection measures provided directly on the container are not sufficient for ensuring the integrity and identity of origin of the transported goods.

Due to the global flows of goods, in particular in the international food trade, transport containers today experienced long and chaotic travel before they reach the intended recipients.

If in the course of this transport chain, ambient threshold values are temporarily not maintained, if errors in container handling occur (e.g. falling), or if mechanical container safety precautions partly fail, then this can usually subsequently not be detected from the outside of the respective container. Only by manually checking the goods removed from the respective container, whether by the suppliers themselves at certain check points along the transport path or whether even only by the recipient of the goods within the framework of incoming goods inspection, is it discovered that the transport containers had been improperly stored or transported, causing, in particular for chilled goods or other goods to be thermo-regulated, the material value of the transported goods to be at stake in part or in totality.

In addition, due to patchy monitoring, the exact time of occurrence of the damage is frequently impossible to trace, so that liability issues between the customer, carrier, intermediate freight forwarder, etc. often remain unresolved.

To minimize the losses in the supply chain, applications are known where monitoring of the transport of goods is enabled by a sensor mounted on the container. The parameters collected by the sensor are transmitted via a wireless transmitter unit, e.g. using GPS, GSM, GPRS, RFID, or satellite communications, to a central monitoring facility in order to possibly take influence on the external conditions of the container as soon as possible before damage to the transported goods occurs.

Such sensor monitoring of a container is known from DE 10 2005 001 118 A1, where information on the state received from a sensor is communicated to a communication module on the container, and this communication module in turn communicates the information on the state to a message receiving device. Such a monitoring system is indeed advantageous for the relevant transport companies to the extent that it can continuously monitor the ambient conditions acting upon the container in order to be able to safely counter potential liability claims against the transport company, or they can in the event of an incident safely remove containers with possibly damaged goods form the goods traffic before they reach the customer, respectively.

High losses of material resulting from mistakes in transporting or storing the transport containers, however, are not minimized by continuous centralized sensor monitoring in a relevant manner, because the reaction time after detection of critical ambient influences being subject to the typically large spatial distance between the centralized monitoring facility and the current location of the transport containers is usually too large in order to exclude harmful effects for the transported goods. The existence of a potentially damaging condition, moreover, needs to be indicated immediately to on-site staff in charge of transportation or storage, respectively, so that this staff is able to face the critical state by means of appropriate corrective measures prior to any damage to the goods.

It is therefore an objective of the present invention to develop a container with which reaching a critical state endangering the transported goods can be detected by the transportation and storage staff both at a monitoring facility as well as directly on the respective container.

This objective is achieved by equipping a container with an electronic seal comprising the features of claim 1. By means of the electronic seal, firstly, influencing factors acting upon the container, which, when exceeding certain threshold values can result in the transported goods being damaged, can be monitored in a central administrative unit and be stored in a central computer for continuous logging. Secondly, the electronic seal, however, also allows detection on the respective transport container of any conditions potentially damaging the goods which are present in or at the container, so that the group of people in charge of handling the transport container is able to immediately react thereto, without needing to rely on feedback from a central monitoring facility.

To fulfill this dual function, the electronic seal comprises at least one sensor for detecting an influencing factor affecting the state of the goods, a transponder being coupled to the sensor for non-contact transmission of data detected by the sensor, as well as a display being able to change its appearance depending on the influencing factor detected by the sensor. By means of the combination of a transponder and a sensor, the state of the container and hence that of the goods transported therein can be monitored at any time and from anywhere, the data on a container and the goods it contains being retrievable preferably in an open system simply via a respective Internet platform upon entering the appropriate container code.

Since the transportation and storehouse staff or the customer does not always have the opportunity to reach this data, the transport container for additional protection comprises a (visual and / or audible) display on the outside, which assumes a different appearance when an influencing factor potentially damaging the goods acts upon the transport container. By means of a simple and catchy design of this display, for example in the form of a "smiley", which changes its appearance depending on the state of the container, even less-qualified staff can recognize that quick intervention in the transportation or storage conditions is required, respectively, in order to restore the desired state of the container. Should such a corrective measure no longer be possible, then the discard containers can easily be separated and sorted out for closer examination without having to rely on any comparison with the central monitoring facility.

The data collected by the sensor and transmitted to the transponder for buffer-storage and wireless transmission can relate to all influencing factors whose change can adversely affect the state of the transported goods, in particular to temperature, humidity, pressure, brightness or acceleration. By means of the acceleration sensor lastly mentioned, for instance, falling of transport containers carrying fragile goods can be reliably detected.

Inexpensive plagiarism protection is likewise possible by means of the electronic seal, for example by having the sensor detect unauthorized opening of the container or by having the transponder continuously read out data from transponders that are provided on the goods transported in the interior of the container, so that continuous authentication of the original state of the transported goods is performed.

The sensor can be arranged such that it detects influencing factors in the interior of the container or in the environment of the container. The electronic seal is used in particular with insulated containers, e.g. cooler boxes for transporting perishable food products, in which conditions defined for the interior of the container (e.g. with respect to temperature, pressure - for transport in (CO₂ or N₂)inert gas atmosphere - a germ-free atmosphere) must be complied with.

The electronic seal can be fitted with additional components, such as with a battery for supplying the sensor, transponder and display with power or with a speaker for outputting audible feedback from the central monitoring facility in the event that incorrect handling of the container is detected.

Preferably, the transponder can be a conventional active RFID transponder, which in addition to the stored collection data of the sensor emits a localization signal to all reading devices in the vicinity for determining the current position.

The invention is described below in greater detail using an embodiment and associated drawings. In these:
- Figure 1: shows a perspective view of a container with a display mounted on the outer side of the container;
- Figure 2: shows an electronic seal inserted into the container of figure 1 in communication with an associated Internet platform;
- Figure 3: schematically shows a container according to the invention with data transmission to an Internet log;
- Figure 4: shows a section through a side wall of the container of Figure 1.

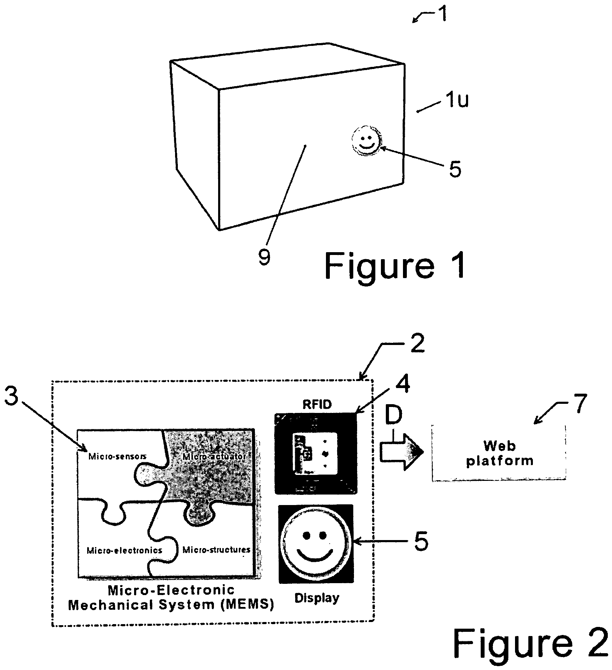

Figure 1 shows a container 1 for receiving goods for transportation, the container being equipped with an electronic seal 2 schematically illustrated in Figure 1.

With conventional mechanical seals, a distinction is basically only made between two states. Either the seal is intact, the integrity and identity of the origin of the goods inside the container thus being guaranteed, or the seal is broken, thus indicating possibly damaging access to the transported goods. With such mechanical seals, which are for instance frequently used as lead-seals for post boxes or containers, it can therefore only be determined whether the container has been opened without authorization, where unauthorized opening, e.g. in case of theft, however, is only one of many possible influencing factors that may adversely affect the state of transported goods.

By means of mechanical seals, however, it can for instance not be determined whether the transported goods have been subjected to strong shocks due to the respective container having fallen, or whether there have temporarily been too high or too low temperatures in the container which in particular could have spoilt transported food products. Accordingly, a mechanically intact seal is no sufficient indication that the respective transport goods are in perfect condition.

The present invention therefore proposes to equip a transport container 1 with an electronic seal 2, where the electronic seal 2 according to Figure 2 comprises the following three basic components: a sensor 3 for detecting influencing factors that could negatively affect the state of the goods, a transponder 4 via which the data D collected by the sensor 3 are retrievable at any time and from anywhere, and a display 5 for displaying whether the measured influencing factors compromise the quality of the transported goods or not. In the embodiment of figure 2, the sensor 3 is part of a micro-electromechanical system (in short: MEMS) and integrated on a common silicon substrate together with mechanical structures, actuators and electronics, where the dimensions of such MEMS chips is in the range of tenths of a millimeter, so that they can be inserted into existing transport containers with no major constructional effort. An RFID transponder is used as a transponder 4, with which data can be encoded and quickly read by a reader.

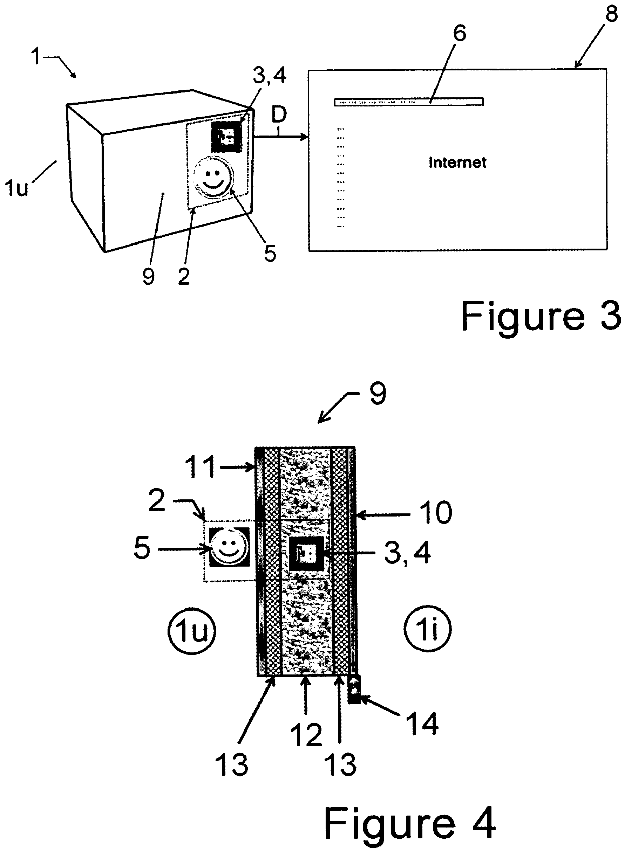

As is also evident from Figure 2, the data D stored in the electronic seal 2, in particular the measurement data of the sensor 3 can be accessed via an Internet platform 7. This, according to Figure 3, requires only that the RFID identification number 6 of the respective transport container 1 be entered into a query mask in order to open a global log 8 which lists all relevant data D of the respective container 1 and is constantly updated.

The log 8 can inter alia list the temperature profile and the mechanical loads of the transport container 1 over the entire transportation time, the RFID chip 4 sending localization signals, so that the log 8 also includes information about the current position of the transport container 1. The RFID chip 4 may furthermore retrievably store other relevant data pertaining to the goods transported in the respective container 1, such as information about the origin and destination of the goods or associated delivery notes, data sheets, custom papers, information on chemicals etc., which, after entering the RFID identification number 6, are then likewise visible via the Internet log 8 of the respective container 1.

Depending on the type of transported goods and the loads typically occurring during transport, the sensors 3 can supply data on the temperature, the pressure, the brightness and / or the acceleration within the container 1 or in the proximate exterior environment 1 u of the container 1. This data recorded by the sensor 3 is respectively associated with the current recording time and the current recording location, so that it can be traced back securely by means of the log 8, when and where in the course of the supply chain an event damaging the goods occurred.

The RFID transponder 4 transmits the sensor data and possibly other information in cryptographically encoded form to the respective RFID readers for decoding. Unauthorized read-out of the transponder 4 or even tampering with the measurement data is thus securely prevented.

The RFID reader forwards the data D received from the RFID transponder 4 after capturing and decoding via a so-called middleware to a backend application, in the present case to a respective Internet platform. By reading out the RFID transponder 4, the respective newly read data D is thus compared with the data contained in the associated Internet log 8.

The exterior view of the container 1 according to figure 1 shows only the electronic seal's 2 optical display 5, which is preferably let into a recess of the container wall 9 in an accurately fitting manner. This display 5 is connected to the RFID transponder 4 and can assume at least two different appearances depending on the measurement values captured by the sensor 3, representing a characterization of the state or the interior conditions, the integrity of the container, and / or any content of the same.

In the case of the display 5 used in Figure 1, these two appearances by way of example are a "smiley" face, at the one time assuming a smiling pose with upturned corners of the mouth (as shown in Figure 1), and at another time, a sad pose with the corners of the mouth turned downwards. If the influencing factors (temperature, pressure, etc.) captured by the sensor are within the tolerance range in which no damage to the transport goods is expected, then the display 5 shows a smiling "smiley" face, whereas a sad "smiley" face is displayed on the display 5 when a threshold value, being predeterminable depending on the type of goods, is exceeded. The display can also comprise other identifications that preferably represent an emotionally perceivable characterization, e.g. in the shape of a sun being provided with an alterable facial expression, or symbolic representations of animals (whale), colors or color combinations, numeric and / or alphabetic displays - also in combination with the aforementioned and the like.

The condition of the electronic seal 2 is documented in the display 5 in a tamper-proof manner. In the event of exceeding the threshold values, the image (e.g. sad "Smiley" face), the word or even the sound (in the case of an acoustic display) displayed by the display 5 can externally no longer be transformed back to the normal state (e.g. smiling "Smiley" face) so that the affected container 1 can safely be removed from the circulation of goods prior to reaching its recipient.

The supply chain staff being directly in charge on-site with transporting or storing such a container 1 hereby directly notices (sees or hears) that something is wrong with the goods of this container 1 and can intervene prior to delivery of the goods to the recipient. This saves time and money because, firstly, the fault is displayed and reported immediately without any need to wait for the feedback from the RFID system and because, secondly, due to the shorter reaction time, quality degradation or material losses can be avoided or further reduced, respectively.

The electronic seal 2 can also be used to combat plagiarism by preventing that the container 1 is opened and the original goods contained therein are exchanged against counterfeits. Firstly, this would be conceivable by having unauthorized opening of the container 1 be detected by the sensor 3. Secondly, it would also possible to equip the transported goods contained in the container 1 each with its own RFID label, the data of which being encoded in the form of a unique serial number, which can be read out by the transponder 4 of the electronic container seal 2 for authentication purposes. In this manner, it can be determined whether transported goods were removed and possibly replaced by counterfeits.

In the sectional view of figure 4, embedding of the electronic seal 2 in the side wall 9 of the transport container 1 is lastly shown. In this, the transport container 1 is designed as an insulated container, which can for instance be used as a cooler box for transporting heat-sensitive goods such as deep-freeze food products, in that it comprises a multi-layered container wall structure 9 for thermally insulating the container interior 1i from the container surrounding 1 u.

The container wall 9 is constructed of an outer wall 11, an inner wall 10 and a thermal insulation layer 12 inserted in between the outer and inner walls 11, 10. While the outer and inner wall 11, 10 are preferably made of polycarbonate (PC), the thermal insulation layer 12 is preferably made of foam material, such as expanded polystyrene particle foam (EPS). An incombustible inner layer 13 is in turn provided for fire protection between the thermal insulating layer 12 and the outer and inner walls 11, 10, for example, in the form of a basalt fiber fabric.

The RFID transponder 4 of the electronic seal 2 is embedded in the insulating foam layer 12 of the container wall 9 and thus well protected from external influences during transport, such as damage from impact, knocking or shocks or damage due to humidity or moisture, etc. The display 5, however, is mounted on the outside wall 11 of container 9 for constant visibility and in figure 4, only for the sake of better illustration, is shown in a perspective rotated to the drawing plane. An LED 14 emitting blue light into the container inner wall 1i is placed on the container inner wall 10 in order to kill germs, bacteria or viruses possibly existing in the air inside the container 1i.

It can be stated in summary: The container 1 according to the invention having an electronic seal 2 is an "intelligent" container enabling immediate feedback of a problem within the supply chain without delay as well as determination of the fault location and fault cause.

According to another embodiment, not shown in the drawings, the electronic seal discussed above can be further simplified or designed (or such an electronic seal can additionally be provided to the electronic seal discussed above) by establishing a "condition monitoring" which expresses the internal conditions of the container including transportation conditions such as mechanical damages, acceleration the container is/was subject to, and the like. The display of said electronic seal is manipulation-proof and easily recognizable.

Thus, the observation of certain predetermined conditions during the lifetime or transportation cycle of the container or the violation (i.e. lapse of time the contents of the container should be consumed or the like) can immediately be derived from the status of the electronic seal.

Said status, for example, can be signaled by green (good condition) or red (bad condition), lighting or flashing, or in other optical, acoustical or electromagnetic waves using ways and displays. Also, mechanical lockings or indications (such as lever positions, clock positions or the like) can be used.

Actually, any type of indication at or to the outside of the container, in particular at the surface thereof, is possible.

The required transportation conditions (for example certain limits of surrounding temperature) can be transmitted to the electronic seal prior to its activation or enactment of its operation, in particular via radio or in any other wireless way, such as via RFID.

The electronic seal, preferably, can only take a bipolar condition, such as green or red, black or white, good or bad face (character) when being a smiley 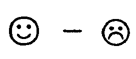 for example, so that the internal status of the package can immediately be identified as "o.k." or "not o.k."

Thus, workers in warehouses can easily identify and accept incoming supplies or refuse or return same to the sender.

Thus, in particular, unauthorized opening of the container, the observation or non-observation of temperature or time limits, environmental conditions the container was subject to, humidity load or residual humidity within the container (time-dependent), transportation conditions such as acceleration, etc., can easily be verified by ordinary workers and warehouse personnel.

If the status of the container is violated in any respect, the electronic seal indicates "not o.k." in any way which can easily be recognized by human beings and without special testing or other equipment.

## Claims

1. Container (1) for containing goods, in particular transport container for food, comprising an electronic seal (2), said electronic seal (2) comprising:
- at least one sensor (3) for detecting at least one influencing factor affecting the state of transported goods;
- a transponder (4) for contactless transmission of data (D), said transponder (4) being coupled to said at least one sensor (3), so that said at least one variable detected by said sensor (3) is retrievable via said transponder (4);
- a display (5) for displaying at least one variable detected by said sensor (3), said display (5) at least once changing its appearance depending on said at least one influencing factor.

2. Container according to claim **1, characterized in that** at least one sensor (3) detects time, temperature, humidity, pressure, brightness, and / or acceleration as an influencing factor.

3. Container according to claim 1 or 2, **characterized in that** at least one sensor (3) detects an influencing factor existing in the interior (1i) of said container and / or the surrounding (1 u) of said container.

4. Container according to claims 1 to 3, **characterized in that** said electronic seal (2) comprises an energy source such as battery power for energizing said sensor (3), said transponder (4), and/or said display (5), in particular a speaker is integrated into said electronic seal (2) for outputting feedback in the event of faulty handling of said container (1).

5. Container according to claims 1 to 4, **characterized in that** a localization signal for determining the current location of said container (1) is transmittable from said transponder (4), preferably other data pertaining to said respective transported goods, such as delivery notes, data sheets, customs documents, test documents, and / or chemical information is retrievably stored in said transponder (4).

6. Container according to claims 1 to 5, **characterized in that** said transponder (4) is provided with an identifying code (6) for login to an Internet platform (7), said transponder (4) being designed such that said respective container data (D) is read out to a respective log (8) of said Internet platform (7), while, preferably, said data (D) transmitted by said transponder (4) is cryptographically encoded, in particular that said transponder (4) is an RFID transponder.

7. Container according to claims 1 to 6, **characterized in that** a changeable graphic symbol such as a "Smiley" face with the corners of the mouth pointing upwards or downwards, respectively, is shown in said display (5), in particular said display is formed as an acoustic display, where a warning signal can be generated by said acoustic display in the event of faulty handling of said container, preferably said display (5) is protected against tampering, in particular, against any change in its appearance.

8. Container according to claims 1 to 7, **characterized in that** said transponder (4) can read out data from transponders being provided on said transported goods within the interior (1i) of said container for authenticating the original state of said transported goods, in particular said data (D) stored in said electronic seal (2) can be communicated to an electronic seal of another container and are mutually exchangeable.

9. Container according to claims 1 to 8, **characterized in that** said container 1 is formed as an insulated container, in particular, as a portable cooler box comprising a multi-layered container wall (9), in particular said container wall (9) comprises an inner wall (10), an outer wall (11), as well as a thermal insulation layer (12) separating said inner wall (10) and outer wall (11) from each other.

10. Container according to claims 8 or 9, **characterized in that** an incombustible inner layer (13) is provided between said thermal insulating layer (12) and said outer wall (10) and inner wall (11), respectively.

11. Container according to one of claims 9 or 10, **characterized in that** said transponder (4) and/or said at least one sensor (3) of said electronic seal (2) are embedded in said thermal insulation layer (12).

12. Container according to claim 11, **characterized in that** a radiation source (14), for example, an LED for emitting blue light is installed in the interior (1 i) of said container

13. Container, in particular according to one of the preceding claims 1 to 12, comprising an electronic seal which is pre-conditionable, in particular by receiving information wirelessly, preferably via RFID, and which is adapted to display an internal or external condition of the container based on its pre-conditioning.

14. Container according to claim 13, comprising a bipolar status reflecting the condition monitoring of the container in terms of the status "O.K." or "NOT O.K.".

15. Container according to claims 13 or 14, comprising a visual or acoustic or wireless based display to the outside of the container reflecting the observance or non-observance of prescribed transportation conditions.
